Europäisches Patentamt

European Patent Office

Office européen des brevets

(11) Veröffentlichungsnummer: **0 423 427 A2**

(12) **EUROPÄISCHE PATENTANMELDUNG**

(21) Anmeldenummer: 90111157.5

(22) Anmeldetag: 13.06.90

(51) Int. Cl.5: **B23Q 1/08**

(30) Priorität: 20.10.89 IT 2207789

(43) Veröffentlichungstag der Anmeldung:
24.04.91 Patentblatt 91/17

(84) Benannte Vertragsstaaten:
AT CH DE ES FR GB IT LI

(71) Anmelder: GILDEMEISTER ITALIANA S.p.A.
Via Donizetti 138
I-24030 Brembate di Sopra(IT)

(72) Erfinder: **Ronzoni, Enrico**
**Via Donizetti 138**
**I-24030 Brembate Sopra (BG)(IT)**

(74) Vertreter: **Mayer, Hans Benno, Dipl.-Ing.**
**de Dominicis & Mayer Piazzale Marengo 6**
**I-20121 Milano(IT)**

(54) Spannvorrichtung zum Festlegen einer Spindelhuelse auf der Plattform einer automatischen Werkzeugmaschine.

(57) Spannvorrichtung zum Festlegen einer Spindelhuelse (2) auf der Aufnahmeplattform (1) einer automatischen Werkzeugmaschine unter Zwischenschaltung eines konkav ausgebildeten Aufnahmeschlittens (3) und Verwendung von Spannleisten (5), die seitlich zu den Spindelaufnahmehuelsen angeordnet sind und in eine entsprechende Ausnehmung (4) der Spindelaufnahmehuelse (2) eingesetzt sind und ueber Schrauben (5a) am zugehoerigen Schlitten (3) befestigt sind. Die Spindelaufnahmehuelse (2) ist am zugeordneten Schlitten (3) zusaetzlich ueber Schrauben (2a) befestigt, die in Gewindeloecher (9) entlang der Mittellinie am Grund des konkav ausgebildeten Schlittens (3) vorgesehen sind. In Halteleisten (6) zum Festlegen der konkav ausgebildeten Schlitten (3) an der Plattform (1) sind Einstellvorrichtungen (8) angeordnet.

FIG. 1

EP 0 423 427 A2

## SPANNVORRICHTUNG ZUM FESTLEGEN EINER SPINDELHUELSE AUF DER PLATTFORM EINER AUTOMATISCHEN WERKZEUGMASCHINE

Die vorstehende Erfindung betrifft eine Vorrichtung zum Festlegen einer Spindelaufnahmehuelse auf der Plattform einer automatischen Werkzeugmaschine gemaess der im Oberbegriff des Anspruches 1 genannten Art.

Besonders in Mehrspindeldrehmaschinen erfolgt die Lagerung von Werkzeugspindeln in einer einen laenglichen Koerper bildenden Plattform, die vieleckigen Querschnitt, z. B. sechseckigen Querschnitt, hat. Auf ihrem Umfang weist die Plattform halbkreisartige Ausnehmung auf, in jeder dieser Ausnehmungen ist ein konkav ausgebildeter Schlitten zur Lagerung einer Aufnahmehuelse fuer eine Werkzeugspindel vorgesehen. Die Aufnahmeschlitten werden entlang ihrer Laengsseiten am Koerper der Plattform befestigt und die Spindelaufnahmehuelse wird in der konkaven Fuehrung mittels Befestigungsmittel montiert.

Eine Vorrichtung dieser Art ist dem US-Patent 4.622.874 zu entnehmen, in der die Befestigung der konkav ausgebildeten Schlitten am Koerper der Plattform unter Verwendung von buegelartigen Befestigungsteilen erfolgt. Die Montage einer jeden Aufnahmehuelse in der konkaven Fuehrung erfolgt ueber Spannnbaender, Klammern oder Spannbuegel, die die zu befestigende Spindelaufnahmehuelse umgreifen, wobei die Spannbaender oder Spannbuegel mit ihren Enden an der zugeordneten konkaven Fuehrung durch Sohraubverbindungen festgelegt werden. Die in der vorveroeffentlichten US-Patentschrift 4.622.874 beschriebene Ausfuehrungsform weist verschiedene Nachteile auf.

Die Befestigung zwischen der Spindelaufnahmehuelse und der konkav ausgebildeten Fuehrung erfolgt ausschliesslich ueber in Umfangsrichtung wirkende Spannbaender oder Spannbuegel. Diese muessen aus Festigkeitsgruenden entsprechende Materialdicke aufweisen, was grosse aufzuwendende Spannkraefte mit sich bringt. Das Aufbringen grosser Spannkraefte in Umfangsrichtung der Spindelhuelse fuehrt aber unweigerlich zu Verformungen des Koerpers der Spindelaufnahmehuelse, was sich wiederum nachteilig auf die Lagerung der Werkzeugspindel auswirkt. Um eine ausreichende und gleichmaessige Steifigkeit in der Verbindung in Axialrichtung zwischen Aufnahmehuelse und konkavem Schlitten zu erreichen, ist es ferner notwendig, eine Mehrzahl dieser Spannbaender oder -backen im Abstand zueinander vorzusehen. Die Spannbaender muessen an ihren Enden hakenartige Gebilde zum Eingriff in entsprechende Profilnuten der konkav ausgebildeten Fuehrung aufweisen. Bei Verwendung von Spannbuegel sind diese zusaetzlich auf ihrer, der Huelse zugerichteten Seite, genauestens zu bearbeiten. Die Anordnung einer Ausnehmung oder Laengsnut fuer den Eingriff der Spannbuegel an den konkav ausgebildeten Fuehrungsschlitten bedingt ferner eine Verlaengerung des Schlittenkoerpers in Umfangsrichtung, was zu vergroessertem Materialaufwand und zu hoeheren Fertigungskosten fuehrt. Bei direktem Befestigen und Spannen der Baender mittels Schraubverbindung, die mit der konkav ausgebildeten Fuehrung in Wirkverbindung treten, ist eine zusaetzliche Bearbeitung der Spindelaufnahmehuelse notwendig um Anfraesungen zu schaffen, die fuer eine Anordnung der Schrauben in unmittelbarer Naehe der Huelse erforderlich sind. In die Spannbacken sind ferner besondere Ausnehmungen fuer die Koepfe der Befestigungsschrauben einzuarbeiten, da die Schraubenschaefte geneigte Anordnung aufweisen. Eine sichere Befestigung unter Verwendung der bekannten Spannbaender bedingt ferner eine gute Verbindung zwischen diesen Spannbaendern und der Spindelaufnahmehuelse. Hierzu sind die dazu vorgesehenen Verbindungsflaechen ebenfalls einer genauen Bearbeitung zu unterziehen, Vorgang der die Gesamtkosten der Vorrichtung weiter erhoeht.

Bei der Montage und dem Spannvorgang der bekannten Spindelaufnahmehuelsen ist es ferner notwendig, wiederholt auf die einzelnen Schraubverbindungen einzuwirken, um Materialnachgiebigkeiten oder Formaenderungen der Spindelhuelse auszugleichen. Diese Ausgleichsvorgaenge sind fuer jede einzelne Spindelaufnahmehuelse der automatischen Werkzeugmaschine, z. B. einer Mehrspindeldrehmaschine, vorzunehmen, was zu langen Ruestzeiten fuehrt, wodurch der Leistungsgrad der investitionsintensiven Werkzeugmaschinen unguenstig beeinflusst wird und eine Erhoehung der Stueckkosten eintritt.

Aufgabe der vorstehenden Erfindung ist es, eine Spannvorrichtung fuer Spindelaufnahmehuelsen vorzuschlagen, mit der die Nachteile des Standes der Technik vermieden werden und es ermoeglicht wird, die genannten Spindelaufnahmehuelse in dem dafuer vorgesehenen konkaven Laengsschlitten rasch und vor allem mit einer beschraenkten Anzahl von Bauteilen, die einfach herstellbar sind, zu montieren und den Spannvorgang mit oertlich begrenzter Belastung der Huelse durchzufuehren, um dadurch Verformungen und Beschaedigungen der Spindelaufnahmehuelse zu vermeiden und gleichzeitig eine vereinfachte Bauform fuer die konkav ausgebildeten Fuehrungsschlitten zu erreichen. Die erfindungsgemaesse Aufgabe wird mit einer Spannvorrichtung geloest, die dadurch gekennzeichnet ist, dass:

a) jede Spindelaufnahmehuelse an, in montiertem Zustand nebeneinanderliegenden, unteren Bereichen entlang den Raendern des konkav ausgebildeten Schlittens mindestens einen Aufnahmesitz fuer eine Spannleiste aufweist und diese Spannleiste loesbar durch Schraubverbindung am zugeordneten Schlitten befestigt ist;

b) die an der Plattform befestigten Druckstuecke leistenfoermige ausgebildet sind und eine Einstellvorrichtung aufweisen, die auf den benachbarten Rand des zugeordneten Konkavschlittens ueber eine von aussen betaetigbare Schraube einwirkt und

c) entlang der Mittellinie am Grund des konkav ausgebildeten Schlittens, Gewindeloecher zur Aufnahme von in der Spindelaufnahmehuelse vorgesehenen Schrauben vorgesehen sind.

Weitere Merkmale der Erfindung koennen den Unteranspruechen sowie der nun folgenden Beschreibung entnommen werden. Mit der erfindungsgemaessen Spannvorrichtung werden verschiedene Vorteile erzielt. Zum einen kann die Vorrichtung in einfacher Weise und mit wenigen Bauteilen hergestellt werden. Das Zuammenfuegen der einzelnen Bauteile erfolgt rasch und der Spannvorgang erfolgt gleichmaessig und vor allem ueber die gesamte Laengserstreckung der Spindelaufnahmehuelse. Es werden somit mit Sicherheit Verformungen der Huelse und Schwingungserscheinungen am Werkzeug, sowie Rattermarken waehrend des Bearbeitungsvorganges vermieden. Die aeussere Flaeche der Spindel aufnahmehuelse kann beliebige Bearbeitungsguete aufweisen. In vorteilhafter Weise wird die Spindelaufnahmehuelse nicht durch unerwuenschte und nachteilige Spannkraefte in Umfangsrichtung der Huelse belastet, es werden dadurch mit Sicherheit Beschaedigungen oder unerwuenschte Verformungen der Spindelaufnahmehuelse oder der im Inneren der Huelse liegenden Bauteile vermieden. Es wird zusaetzlich eine Vereinfachung der Konstruktion der konkav ausgebildeten Fuehrung, d. h. der Raender der Fuehrung, erreicht. Weitere Merkmale, Vorteile und Einzelheiten der erfindungsgemaessen Spannvorrichtung zum Festlegen einer Spindelaufnahmehuelse an der Werkzeugaufnahmeplattform einer Werkzeugmaschine, besonders einer automatischen Mehrspindeldrehmaschine koennen der nun folgenden Beschreibung unter Bezugnahme auf die beigefuegten Zeichnungen entnommen werden. In den Zeichnungen ist ein Ausfuehrungsbeispiel der erfindungsgemaessen Spanneinrichtung dargestellt. Es zeigen:

Fig. 1 eine Schnittdarstellung im Detail durch eine Werkzeugaufnahmeplattform sowie durch zwei nebeneinander liegende Spindelaufnahmehuelsen;

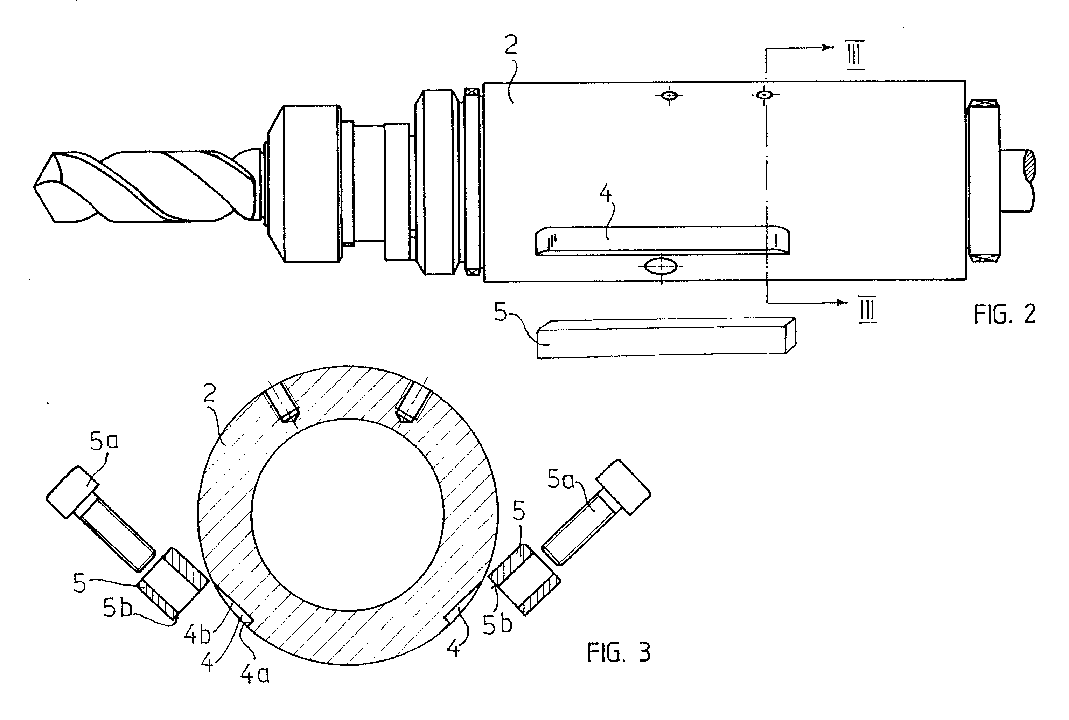

Fig. 2 eine Vorderansicht der erfindungsgemaessen Spindelaufnahmehuelse gemaess Fig. 1;

Fig. 3 einen Schnitt nach Linie III-III durch eine Spindelaufnahmehuelse gemaess Fig. 2.

In den Zeichnungen, die aus Gruenden der besseren Uebersichtlichkeit mit unterschiedlichem Massstab angelegt wurden, sind gleiche Bauteile mit gleichen Bezugzeichen versehen. Mit 1 ist der Koerper eines Aufnahmefutters oder einer Plattform fuer die gleichzeitige Aufnahme mehrerer, in automatischen Werkzeugmaschinen ueblichen Werkzeugen dargestellt. In den Zeichnungen ist der Koerper 1 der Aufnahmeplattform fuer die Aufnahme von sechs Werkzeugaufnahmehuelsen 2 vorgesehen. Von den Werkzeugaufnahmehuelsen sind in der Zeichnung nur zwei Huelsen dargestellt. Zwischen den Spindelaufnahmehuelsen und dem Koerper 1 der Plattform ist stets ein konkav ausgebildeter Aufnahmeschlitten 3 oder Halter angeordnet.

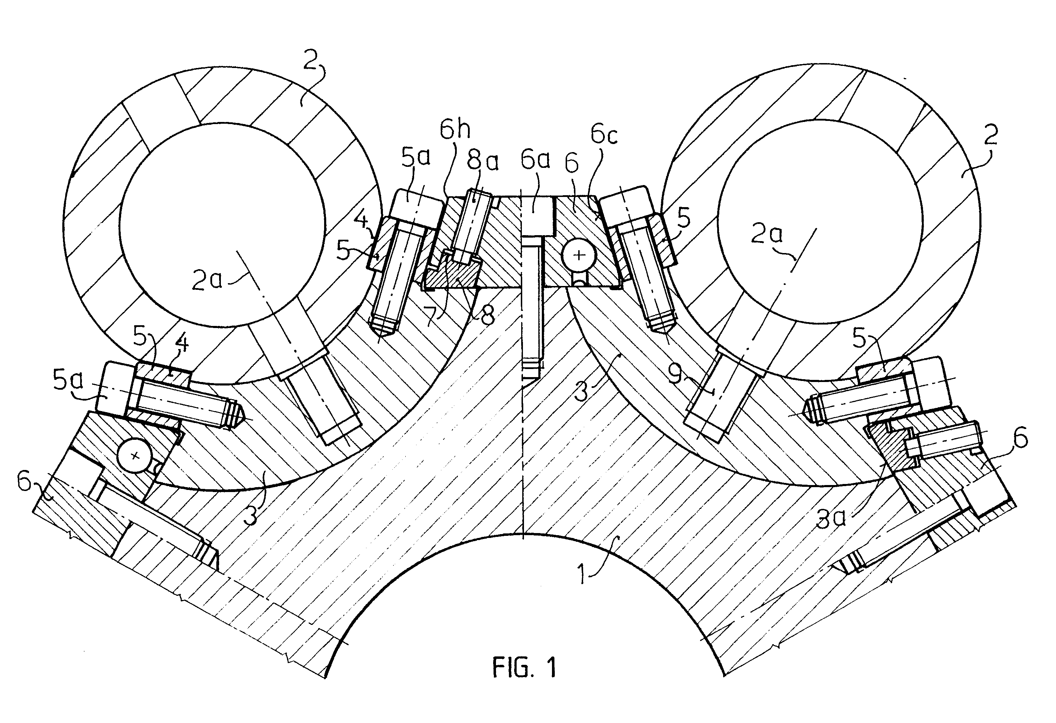

Wie den Zeichnungen zu entnehmen ist, weist jede Spindelaufnahmehuelse 2 an nebeneinanderliegenden Bereichen, in montiertem Zustand parallel zu den Raendern der konkav ausgebildeten Schlitten 3 Ausnehmungen 4 auf, in die eine Leiste 5 zum Spannen und Befestigen der Huelse 2 mittels Schrauben 5a am zugeordneten Konkavschlitten 3 vorgesehen ist. Die Ausnehmungen 4 weisen im dargestellten Ausfuehrungsbeispiel im wesentlichen L-Form auf, wobei die kuerzere Seite der L-foermigen Aufnehmungen 4, d. h. die Grundseite 4a, mit der Unterseite 5b der Spannleiste 5 in Wirkverbindung tritt. Erfindungsgemaess sind flache Anpressstuecke 6 zum Befestigen und Halten der konkav ausgebildeten Schlitten 3 am Koerper der Plattform 1 unter Zuhilfenahme von Schrauben 6a vorgesehen (siehe Fig. 1). Die Anpressstuecke 6 weisen auf ihrer Unterseite Ausnehmungen 7 zum Einsetzen einer Einstellvorrichtungen 8 in Form einer Platte auf. Die Einstellvorrichtungen 8 sind an die jeweiligen Laengsraender 3a des zugeordneten konkaven Schlittens 3 anpressbar.

Wie der Fig. 1 zu entnehmen ist, sind die Einstellplatten 8 gegen den konkaven Schlitten 3 durch von aussen betaetigbare Schrauben 8a anpressbar.

Wie weiter den Zeichnungen zu entnehmen ist, sind die Seitenflaechen 6b, 6c der Spannstuecke 6 und die laengere Flaeche 4b der L-foermigen Ausnehmung 4 in der Spindelaufnahmehuelse 2 bei montiertem Zustand parallel zueinander und laengs der mittigen Laengsflaeche der Schrauben 5a der Spannleisten 5 ausgerichtet. Somit dienen die Flaechen 6b, 6c und 4b als Fuehrungsflaechen zur Lageeinstellung der Spannleiste 5 waehrend der Montage der Spindelaufnahmehuelsen.

Erfindungsgemaess sind laengs der Mittelachse des konkav ausgebildeten Schlittens 3 eine Anzahl von Gewindebohrungen 9 vorgesehen, die zur Aufnahme von Schrauben 2a zum Befestigen der Spindelaufnahmehuelse 2 am konkav ausgebildeten Schlitten 3 dienen. Die Anzahl der Bestigungsschrauben 2a kann frei gewaehlt werden, praktisch wird ihre Anzahl von der Laenge der Spindelaufnahmehuelse 2 bestimmt. In Abhaengigkeit von der Laenge der Aufnahmehuelse 2 wird auch die Baulaenge fuer die Ausnehmungen 4 an der Spindelaufnahmehuelse 2 sowie die Baulaenge fuer die entsprechenden Spannleisten festgelegt. In der Praxis koennten sich die Ausnehmungen 4 auch ueber die gesamte Laenge der Spindelaufnahmehuelse 2 erstrecken oder auch mehrere Ausnehmungen 4 vorgesehen sein.

Der vorangegangenen Beschreibung kann entnommen werden, dass durch die erfindungsgemaesse Spannvorrichtung die der Erfindung zugrundeliegende Aufgabe voll geloest wird und die im einleitenden Teil der Beschreibung aufgefuehrten Vorteile erzielt werden.

Nennenswert ist die Einfachheit der verwendeten Bauteile und die Gleichmaessigkeit des Spannvorganges der Spindelaufnahmehuelsen 2 auf der Plattform. Die Anzahl der Bauteile ist beschraenkt, die Vorrichtung kann mit einfachen und wenigen Bearbeitungsvorgaengen hergestellt werden. Es ist ferner zu entnehmen, dass mit der erfindungsgemaessen Spannvorrichtung keinerlei radial gerichtete Kraefte auf die Spindelaufnahmehuelsen 2 und somit keinerlei Verformung der Huelse 2 und keine Aenderung des Rundlaufes der Huelsen eintreten. Dies bringt mit sich, dass die im Inneren der Spindelaufnahmehuelse 2 vorgesehenen Bauteile einwandfrei rundlaufen und mit hoher Praezision arbeiten koennen.

Durch die Verwendung von einstellbaren Spannvorrichtungen wird ferner eine einwandfreie und genaue Montage der konkav ausgebildeten Schlitten moeglich.

In der Praxis koennen alle Einzelbauteile der Spannvorrichtung durch andersartige Bauteile, die technisch aequivalent sind ersetzt werden, ohne dadurch den Schutzbereich der Erfindung zu verlassen. So waere es ohne weiteres moeglich, Spannleisten zum Spannen der Spindelaufnahmehuelsen zu verwenden, deren Querschnitt unterschiedlich von einem viereckigen oder quadratischen Querschnitt ist. Es koennten auch die entsprechenden Aufnahmesitze in der Spindelaufnahmehuelse geaendert werden. Des weiteren koennte eine andersartige Ausbildung der Spannleisten zum Festlegen der konkav ausgebildeten Schlitten vorgesehen sein, und es koennte eine andere Ausbildung fuer die Einstellvorrichtung oder fuer die Aufnahmesitze dieser Einstellvorrichtungen vorgesehen werden, ohne dadurch aus dem Schutzumfang der Erfindung auszutreten.

Es sei abschliessend darauf hingewiesen, dass durch die zusaetzliche Befestigung der Spindelaufnahmehuelse entsprechend der vorstehenden Erfindung, d. h. in Radialrichtung ueber die am Huelsengrund in die Gewindebohrungen 9 eingesetzten Schrauben und in Tangentialrichtung ueber die Spannfedern 5, optimale Steifigkeit fuer die eingebauten Spindelaufnahmehuelsen und daher optimale Genauigkeit fuer die verwendeten Bearbeitungswerkzeuge gegeben ist.

**Ansprüche**

1. Spannvorrichtung zum Festlegen einer Spindelaufnahmehuelse an der Plattform einer automatischen Werkzeugmaschine, unter Vorsehung einer konkaven Aufnahme fuer jede Spindelaufnahmehuelse, die zwischen der Plattform und einer zugeordneten Spindelaufnahmehuelse angeordnet ist, mit Befestigungsteilen, die am Koerper der Plattform mittels Schrauben befestigbar sind und gleichzeitig die Laengsraender von jeweils zwei nebeneinanderliegenden konkav ausgebildeten Schlitten festlegt, **dadurch gekennzeichnet** , dass

a) an jeder Huelse (2), an in montiertem Zustand nebeneinander angeordneten unteren Bereichen entlang der Raender des konkav ausgebildeten Schlittens (3) mindestens eine Ausnehmung (4) zur Aufnahme einer Spannleiste (5) vorgesehen ist und die Spannleiste loesbar mittels Schrauben (5a) am zugeordneten Schlitten (3) befestigt ist,

b) die an der Plattform befestigten Anpreßstuecke (6) leistenfoermig ausgebildet sind und eine Einstellvorrichtung (8) aufnehmen, die auf den benachbarten Rand des zugeordneten konkav ausgebildeten Schlittens (3) ueber eine von aussen betaetigbare Schraube (8a) einwirkt und

c) entlang der Mittellinie am Grund des konkav ausgebildeten Schlittens (3), Gewindeloecher (9) zur Aufnahme von Bestigungsschrauben (2a), die in die Spindelaufnahmehuelse (2) eingeschraubt sind, vorgesehen sind.

2. Vorrichtung zum Spannen einer Spindelaufnahmehuelse, **dadurch gekennzeichnet** , dass die im Koerper der Spindelaufnahmehuelse (2) vorgesehenen Ausnehmungen (4) im Schnitt L-foermige Gestalt aufweisen und die untere, schmaler ausgebildete Seite (4a), mit der Unterseite (5b) der Spannleiste (5) zum Festlegen der Spindelaufnahmehuelse (2) auf dem Schlitten (3) zusammenwirkt.

3. Spannvorrichtung fuer eine Spindelaufnahmehuelse, nach Patentanspruch 1 und 2, **dadurch gekennzeichnet** , dass die Seitenflaechen (6b, 6c) des Spannstueckes (6) des Schlittens (3) und die laengere Seite (4b) der L-foermig ausgebildeten Ausnehmungen (4) der Spindelaufnahmehuelse (2) parallel zueinander und zur Mittelachse der Schrauben (5a) der Spannfedern (5) der Aufnahmehuelse (2) am Schlitten (3) angeordnet sind.

4. Spannvorrichtung fuer eine Spindelaufnahmehuelse, nach Anspruch 1, **dadurch gekennzeichnet** , dass die Spannfedern (5) zum Festlegen der Spindelaufnahmehuelse (2) am Schlitten (3) vierekkigen, in bevorzugter Weise quadratischen Querschnitt aufweisen.

5. Spannvorrichtung fuer eine Spindelaufnahmehuelse, nach Patentanspruch 1, **dadurch gekennzeichnet** , dass die Einstellvorrichtung (8) aus einem leistenartigen Bauteil besteht, das im Teil (6) in einer Ausnehmung angeordnet ist, dessen Seitenflaechen als Fuehrungsflaechen fuer die Einstellvorrichtung (8) waehrend der Verschiebung der Vorrichtung (8) dient.

6. Werkzeugaufnahmeplattform, **dadurch gekennzeichnet** , dass sie Spindelaufnahmehuelsen aufweist, die mit einer Spannvorrichtung nach einem oder mehreren der Ansprueche ausgeruestet ist.

FIG. 1

EP 0 423 427 A2

FIG. 2

FIG. 3

7